# EUROPEAN PATENT APPLICATION

(11) **EP 1 876 532 A1**
(43) Date of publication of application: **09.01.2008**
(21) Application number: 06116604.7
(22) Date of filing: 05.07.2006
(51) Int. Cl.: G06F 11/36

(54) **A method and a system for testing software modules in a telecommunication system**

(71) Applicant: TELEFONAKTIEBOLAGET LM ERICSSON (publ), 164 83 Stockholm (SE)
(72) Inventor: Bengtsson, Jonas, 261 71, Landskrona (SE); Hageman,Niklas, 254 63, Helsingborg (SE); Törndahl, Marcus, 218 53, Klagshamn (SE)
(74) Representative: Andersson, Björn E.

(57) **Abstract**

A system and a method for testing software, comprising a self-contained software code container. The self-contained software code container includes a software code describing a function, probe surveillance for monitoring the test environment, local error handler for internally handing occurring errors, analyzing block and result block for analyzing the performance of the function software during the execution of the software code and outputting the result to an execution control block.

## Description

### TECHNICAL FIELD

The present invention relates to testing of software, especially verification of software in telecommunication systems.

### BACKGROUND

When new software and systems for telecommunication are developed they need to be verified to ensure that they fulfill requirements of the system. One common way to test systems is to let the testers go through different Use Cases (UC), where a UC is a system requirement specification, and where each UC can be a single function, e.g. Voice Call, "Wireless Application Protocol" (WAP), Multimedia Messaging Systems (MMS), "Push to talk Over Cellular" (PoC) etc. It can also be a combination of several functions that are tested simultaneously, also called a concurrency Use Case, but it can also be a performance Use Case, where several functions are tested simultaneously and repeatedly. A function needs to be tested separately and in combination with other functions, resulting in an abundance of different combinations and a corresponding need for code development. Consequently, one new function may result in that multiple new Test cases or combinations need to be developed and verified before the test execution starts.

As a manifold of new functions is implemented into the telecommunication system software, the combinations of different functions almost increase potentially and thereby also the number of TC's that need to be composed and tested on the telecommunication system software implemented, and thereby also the number of places in the test system where the test software needs to be potentially altered. Another aspect is errors that occur due to the problem in the testing environment during a test, which errors are often not directly monitored during the test. Consequently, the network or platform status is e.g. typically not monitored during the tests. Therefore any error related to network problems or failures, as well as mobile platform status and errors occurring in the mobile platform, needs to be identified by manual analysis of the test logs. Such manual analyzing, is however, very time-consuming.

In the art a number of different ways of systemizing the way of testing different hardware and software has been developed. In WO-A2-03/09691 a system and a method for testing an application including several modules are disclosed. The system correlates the input data by a test case so that each module may provide different data for each test case. A controller executes the modules and determines an execution order for the modules. The disclosed system and method lack monitoring of parameters of the tested test case, and seem to be fitted to be planning tools and not real test tools. In WO-A2-02/056541 a method and a system for testing communications network components are disclosed. The system includes a generic package including generic procedures across the device-specific packages to perform common functions, such as startup and cleanup. Thereby test cases can be written using generic commands for common procedures. The disclosed system and method give a platform for a common code language for certain parts of the procedures, but coding is still needed for every change of the code or added function to be tested.

There is a need for a test tool that enables testing of an abundance of different use cases without the need of coding the same function for each use case where the function is tested. There is also a need for the possibility to monitor specific parameters during the tests so that the failing tests, which did not fail due to the tested software or use case, automatically can be separated from the test data.

### SUMMARY

An object of the present invention is to provide a test system to systematically handle each use case so that each use case only needs to be coded once.

This object is attained by a system for testing software, comprising self-contained software code containers, where each self-contained software code container includes software describing a specific function and where one or several self-contained software code containers are combined to create different test cases or test suites; each test case being a combination of one or several self-contained software code containers, and where an execution control block for the execution of one or several combined self-contained software code containers composes different test cases to perform tests and monitors the self-contained software code containers.

According to another aspect of the invention the system for testing software includes self-contained software code containers having means for monitoring the testing environment, means for handling errors occurring during test, means for analyzing the test of the function software included in the self-contained software code containers and means for outputting the result of the test of the function included in the self-contained software code containers.

According to yet other aspects of the invention the means for monitoring the testing environment is a probe surveillance means for monitoring probes activated within the telecommunication system software to be tested. The means for handling errors occurring during test is a local error handler included in the self-contained software code container, which is able to clean up errors and to orderly terminate the execution. The means for analyzing the test of the function software is an analysis block included in the self-contained software code container. The means for outputting the result of the test of the function is a result block included in the self-contained software code containers, which outputs data to the execution control block.

Another object of the present invention is to provide a test method for systematically handling each test case so that each test case only needs to be coded once.

This object is attained by a method for testing telecommunication system software modules; the method comprises the executing of the software of a first self-contained software code container. The method further comprises the monitoring of the test by a software monitoring block of each self-contained software code container; the monitoring of the test environment by a probe surveillance of the telecommunication system software; the local handling of errors during the test inside each of the self-contained software code containers; and the outputting of result data from the test to an execution control block.

According to yet another aspect of the invention the method for testing telecommunication system software modules further includes the executing of test system software of a second or more self-contained software code containers parallelly or subsequently in respect of the test system software of the first self-contained software code container.

According to yet another aspect of the invention the method for testing telecommunication system software modules further includes analyzing the execution of the software of each self-contained software code container internally and outputting both result data and error data from each self-contained software code container to the execution control block. It also includes the using a signal from the self-contained software code container to synchronize the execution of the software of each self-contained software code container, the signal being sent to the execution control block.

### BRIEF DESCRIPTION OF THE DRAWINGS

In the following, the invention will be explained with reference to the accompanying drawings, where:
Fig. 1 is an overview of a self-contained software code container according to the invention;
Fig. 2 is an overview of a test suite execution using the self-contained software code container according to the invention;
Fig. 3 shows an example of a function testing using the self-contained software code container according to the invention;
Fig. 4 shows an example of a concurrency testing using the self-contained software code container according to the invention;
Fig. 5 shows an example of a performance testing using the self-contained software code container according to the invention;
Fig. 6 is a detailed description of the self-contained container according to the invention; and
Fig. 7 shows a flow chart of the execution of the self-contained software code container according to the invention.

### DETAILED DESCRIPTION

The concept of the invention is to create high intelligence self-contained software code containers, also called S3C. A self-contained software code container as used in according to the present invention is a virtual and independent unit including different blocks of computer coding, each block representing a function, a tool or the like interconnected with the other blocks inside the self-contained software code container and having input and output connectors to be connected to a testing system. A self-contained software code container includes a computer code describing a specific function, e.g. Voice Call, "Wireless Application Protocol" (WAP) or Multimedia Messaging Systems (MMS). It further includes a system for handling errors occurring inside the container during testing; probe surveillance for monitoring specific parameters of the tested system affecting the test; and data analysis for analyzing the performance of the function described or coded inside the self-contained software code container.

An Execution Control Block (ECB) combines different self-contained software code containers to create Test Cases (TC) or test suites for different test purposes. Each of the S3C can be combined with any other S3C to create highly complex system testing. The ECB will work as a supervising unit or a test manager that combines the S3Cs to form the different TCs.

Each function and all the variations of that function are only included in one S3C. Thus, if a specific function needs to be re-programmed or re-coded, it is only necessary to program or re-program the single S3C including that specific function. The changes can be due to an Error report, an upgraded API interface, changes in the analysis methods etc. Each function can include several different subordinated functions or sub functions, e.g. the function *Voice Call* includes sub functions such as *Setup Voice Call, Make Voice Call* and *End Voice Call,* etc.

To ensure that the function code included in the S3Cs complies with its specified requirements and that any unmodified code has not been affected by other changes inside the S3Cs, means for monitoring of telecommunication software probes activated in the software to be tested (or by other words a quality control measure) are included in the S3Cs. The software surveillance probes allow the variables in the software code under test to be observed or followed in real-time as the software or the test system is executed. Typically the software probe surveillance functionality monitor the status of the system upon which the different functions included in the S3C are tested. The probe surveillance can monitor any status of the system, data flow, abnormalities in the radio network or any other important system behavior.

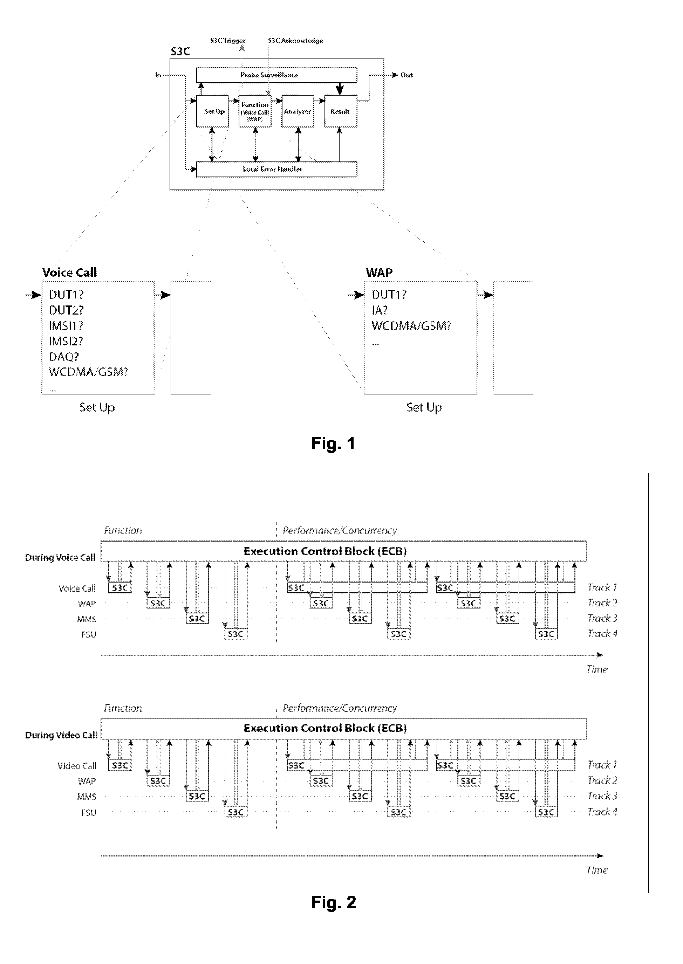

In Fig. 1 an overview of the S3C is shown. The S3C comprises several input/output connections for providing the S3C with input data, Error data, synchronization data etc. It further comprises a *Probe Surveillance* block, a *Set-Up* block, a *Function* block, an *Analyzer* block, a *Result* block and a *Local Error Handler* block.

The *Probe Surveillance* block, as described above, monitors essential functions of the device or software under test, such as network status, memory measurements, CPU load and other general parameters of the system. The *Probe Surveillance* block also activates test and verification platform (TVP) probes for the specific function block in the S3C. The *Probe Surveillance* block activates and monitors TVP probe points during the S3C execution. The probe surveillance data is then analyzed in the *Result* block.

The *Set-Up* block comprises information for the initialization and set-up before the function, which is included in the S3C, is executed. It further comprises information about different variations of how to set up a specific function, e.g. a call setup can be *GSM Call, WCDMA Call* etc.

The *Function* block comprises the coded function, e.g. the *Voice call* functionality. It further comprises signals, such as a *S3C Trigger* signal and a *S3C Acknowledge* signal that can be used for synchronization between different S3Cs.

The *Analyzer* block analyses information about the executed function. The information can be audio quality measurements for *Voice Call,* audio & video synchronization analysis for *Video Call* etc.

The *Result* block gathers data from the *Analyzer* block and from the *Probe Surveillance* block. The gathered data or information is combined and evaluated to retrieve a test result. Typical results from the *Result* block are that the function of the S3C passed the test, Failed or that a Test environment error occurred. The *Result* block also reports the result of the S3C, logs of the test or if a dump has occurred.

The intelligent *Local Error Handler* block handles internal errors in the S3C, such as unexpected behavior of the test object. If an error occurs the Local Error Handler will clean up and in structured manner terminate the execution of the S3C function.

As understood from Fig. 1 the different blocks of the S3C are connected to each other to together achieve the above-described self-contained software code container functionality. Each S3C will be built-up by the corresponding blocks.

Now different applications of the S3C will be described. The shown applications are typical system tests that are achieved by the combination of different S3Cs at different points in time. The *Execution Control Block* (ECB) handles the synchronization of the different S3Cs. A malfunction of the tested function will typically terminate one or more S3Cs prematurely, resulting in that the ECB restarts the S3C and continues the testing with the next Use Case (UC).

In Fig. 2 an example of a test suite or a TC execution is shown. The test starts with a function test, where different S3Cs are tested individually, see the left part of Fig. 2. The arrows pointing downwards and upwards, respectively, represent initial signals and closing signals, respectively. Thereafter performance and concurrency tests can be carried out, see the right part of Fig. 2, where a function is initiated and thereafter parallel functions are initiated and closed while the first function is running.

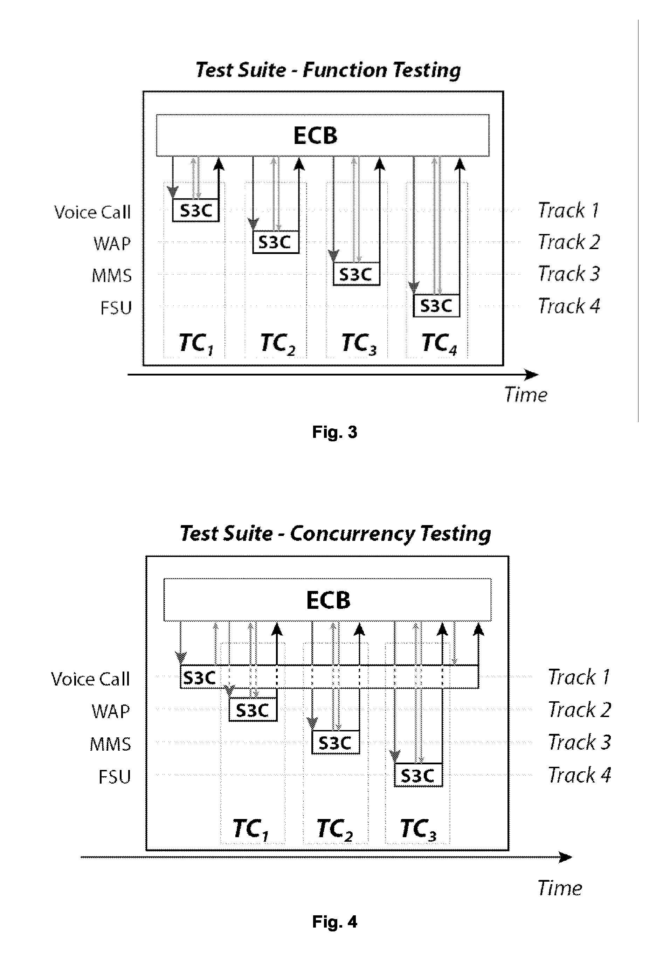

In Fig. 3 the test suite for function testing is shown in more detail. Four different functions or S3Cs are tested individually; *Voice call, WAP, MMS* and *FSU* (File System Unit). To begin with the test of the *Voice call* functionality is performed by the ECB, thereafter, the tests of the *WAP* functionality, the *MMS* functionality and the FSU functionality are performed.

In Fig. 4 the test suite for concurrency testing is shown in more detail. A concurrency test means that a S3C including a specific function is started, here the *Voice Call* function. While the first function is running different Use Cases are initiated to test if the first function continues to fulfill the requirements or if some parts of the first function fail. In Fig. 4 the main or first S3Cto be tested is *Voice Call.* The ECB will start the *Voice Call* S3C to form a concurrency case and wait for the S3C to initiate. Thereafter, the ECB will start the first combinational S3C, here *WAP*. The *WAP* S3C will perform the test and finish. Thereafter, the ECB starts the next functional S3C, MMS. This is repeated until all tests are performed. When all concurrency *UCs* have been run, the ECB will initiate the tested *Voice Call* S3C to shut down. The synchronization of the different UCs is handled by the *S3C Trigger* and the *S3C Acknowledge* functionality.

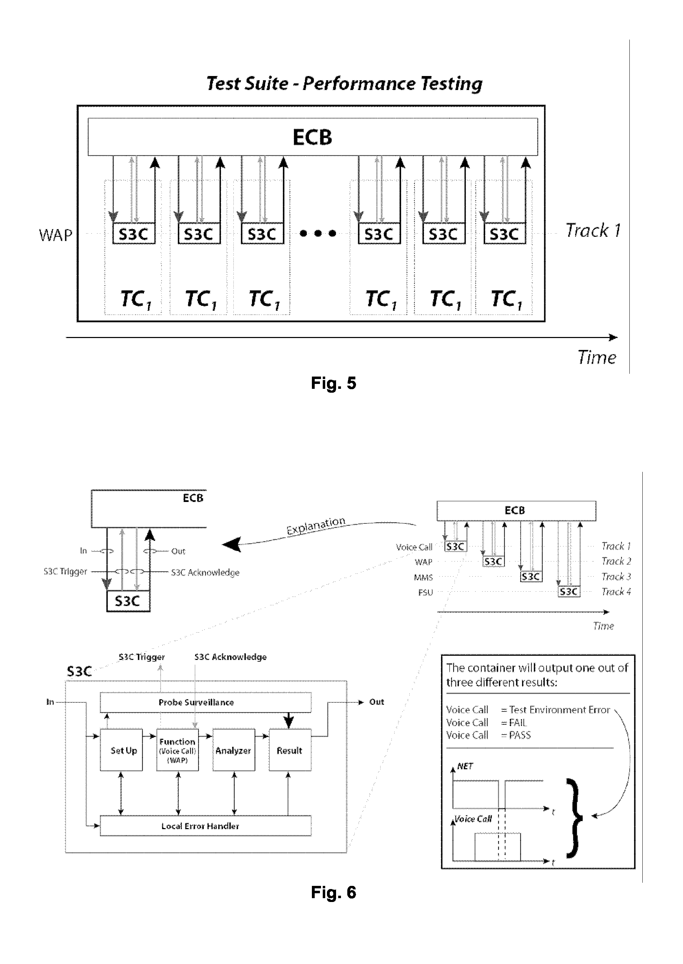

In Fig. 5 the test suite for performance testing is shown in more detail, where the tested S3C, here a WAP S3C, is tested repeatedly to see if the S3C fulfils the system requirements even after a large number of repeated tests. The ECB can also run a test suite or TCs being any combination of the above tests.

In Fig. 6 a detailed description of the S3C concept according to the invention is disclosed. To begin with, the ECB sends an In-parameter to the S3C container to start the S3C, whereby the In-parameter is indicated by the first down-pointing arrow. Thereafter, the ECB waits for the S3C to initiate and when the function included inside the S3C is set-up, the S3C sends a *S3C Trigger* signal back to the ECB confirming its status. The ECB can either initiate the start of other S3Cs or wait for the first S3C to finish and send an *Out-*parameter to the ECB. The *Out*-parameter indicates that the S3C is finished and that the results of the tested function in the S3C are available. Possible result types are PASS, FAIL and Test Environment Errors (for instance radio network error, service provider error, data network error). The test environment errors could e.g. be an indication that the telecommunications network has gone down during the test. See the example shown to the right below the corner of Fig. 6 where the diagram shows the Network failure while testing the function of the S3C container. The test environment errors are handled by the Probe surveillance functionality included inside the S3C, which also is initiated by the In-parameter as shown by the overview of the S3C in Figs. 1 or 6.

If further S3Cs are started, while the first S3C is running, the signals *S3C Trigger* and *S3C Acknowledge* are used to synchronize the start and stop of the different S3Cs.

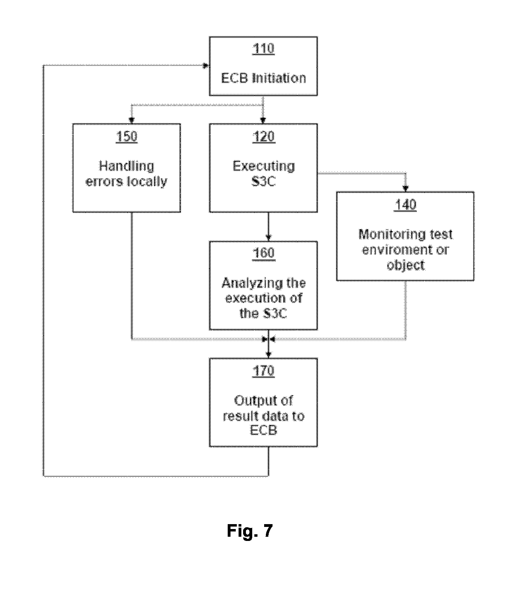

In Fig. 7 a flow chart of the execution of a single self-contained software code container is shown. The execution of the S3C comprises a first step 110 of initiating the ECB. Thereafter the ECB executes the S3C, step 120.In parallel with the execution of the S3C step the handling of local errors, step 150, is activated and errors occurring during the execution of the S3C are handled locally. The S3C execution activates the probe surveillance monitoring of the test environment, step 140. The performance of the S3C is analyzed, step 160, and the result of the execution of the S3C is outputted to the ECB, step 170, together with the results from the local error handling, step 150, and the test environment monitoring, step140. If several S3Cs are involved in the execution several similar parallel or sequential operations are included in the execution of the S3Cs depending on the complexity of the Use Case.

As described above the self-contained software code containers and the software probes are used in a system for testing platforms for telecommunication handset using either a reference radio network, a real radio network or a combination thereof, and where the tested software modules can be platform software, but the self-contained software code containers are a part of the test system software and the software probes are a part of the tested software. However the self-contained software code containers and the software probes can also be used for testing radio networks.

The invention is not limited to the embodiments described above and shown on the drawings, but can be supplemented and modified in any manner within the scope of the invention as defined by the enclosed claims.

## Claims

1. A method for testing software modules, the method comprising:
- initiating an Execution Control Block and;
- executing software of a first self-contained software code container;
- monitoring the test by a software monitoring block of each self-contained software code container;
- monitoring the test environment by a probe surveillance of each self-contained software code containers;
- handling errors locally occurring during the test inside each of the self-contained software code containers;
- and outputting result data from the test to the execution control block.

2. A method for testing software modules according to claim 1, wherein the method further includes the step of:
- executing the software of a second or more self-contained software code containers parallelly or subsequently in respect of the software of the first self-contained software code container.

3. A method for testing software modules according to claim 1 or 2, wherein the method further includes the step of:
- analyzing the execution of the software of each self-contained software code container internally and outputting both result data and error data from each self-contained software code container to the execution control block.

4. A method for testing software modules according to any of claims 1-3, wherein the method further includes the step of:
- using a signal from the self-contained software code container to synchronize, by the execution control block, the execution of the software of each self-contained software code containers

5. A system for testing software, comprising:
- self-contained software code containers, each self-contained software code container including software describing a specific function;
- where one or several self-contained software code containers are combined to create different test cases or test suites; each test case being a combination of one or several self-contained software code containers and;
- an execution control block for the execution of the one or several combined self-contained software code containers, where the execution control block is configured to create different test cases to perform tests and to monitor the self-contained software code containers.

6. A system for testing software according to claim 5, wherein the self-contained software code containers further comprises:
- means for monitoring the testing environment;
- means for handling errors occurring during test;
- means for analyzing the test of the function software included in the self-contained software code containers; and
- means for outputting the result of the test of the function included in the self-contained software code containers.

7. A system for testing software according to claim 5 or 6, wherein the means for monitoring the testing environment is a software probe surveillance block included in the self-contained software code container.

8. A system for testing software according to any of claims 5-7, wherein the means for handling errors occurring during test is a local error handler included in the self-contained software code container and being able to clean up errors and to orderly terminate the execution.

9. A system for testing software according to any of claims 5-7, wherein the means for analyzing the test of the function software is analysis block included in the self-contained software code container; and where the means for outputting the result of the test of the function is result block included in the self-contained software code containers and outputting data to the execution control block.
